# EUROPEAN PATENT SPECIFICATION

(11) **EP 4 160 415 B1**
(45) Date of publication and mention of the grant of the patent: **29.04.2026**
(21) Application number: 21200219.0
(22) Date of filing: 30.09.2021
(51) Int. Cl.: G06F 9/54

(54) **SYSTEM AND METHOD FOR ENABLING CLIENT-SERVER COMMUNICATION USING OPC UA PROTOCOL**
SYSTEM UND VERFAHREN ZUR ERMÖGLICHUNG DER CLIENT-SERVER-KOMMUNIKATION MITTELS OPC-UA-PROTOKOLL
SYSTÈME ET PROCÉDÉ POUR PERMETTRE UNE COMMUNICATION CLIENT-SERVEUR À L'AIDE D'UN PROTOCOLE UA OPC

(43) Date of publication of application: 05.04.2023
(73) Proprietor: Siemens Mobility GmbH, 80997 München (DE)
(72) Inventor: EISLER, Eugen, 38120 Braunschweig (DE); ESTEVES, Maria Tanya, 403602 Fatorda, Goa (IN); GAWANDE, Amit, 411058 Pune, Maharashtra (IN); RIBBECK, Lars, 31246 Ilsede (DE)
(74) Representative: Isarpatent

(56) References cited:
- "IEC 62541-3 ED3: OPC Unified Architecture - Part 3: Address Space Model", 1 May 2020 (2020-05-01), pages 1 - 123, XP082020621, Retrieved from the Internet <URL:https://www.iec.ch/cgi-bin/restricted/getfile.pl/65E_715e_FDIS.pdf?dir=65E&format=pdf&type=_FDIS&file=715e.pdf> [retrieved on 20200501]
- WESKAMP JAN NICOLAS ET AL: "An Industrie 4.0 compliant and self-managing OPC UA Aggregation Server", 2021 26TH IEEE INTERNATIONAL CONFERENCE ON EMERGING TECHNOLOGIES AND FACTORY AUTOMATION (ETFA ), IEEE, 7 September 2021 (2021-09-07), pages 1 - 8, XP034033045, DOI: 10.1109/ETFA45728.2021.9613365
- BRAUN ROLAND ET AL: "OPC UA Server Aggregation : Best practices and extended functions", vol. 62, no. 4, 22 April 2020 (2020-04-22), DE, pages 70 - 77, XP055889199, ISSN: 2190-4111, Retrieved from the Internet <URL:http://dx.doi.org/10.17560/atp.v62i4.2462> DOI: 10.17560/atp.v62i4.2462
- IAN L TUOMI: "Aggregating OPC UA Server for FlexibleManufacturing Systems", INTERNET CITATION, 7 July 2015 (2015-07-07), XP002794441, Retrieved from the Internet <URL:https://core.ac.uk/download/pdf/80716585.pdf> [retrieved on 20190920]

## Description

The present invention relates to client-server communication, and more particularly relates to an aggregator for enabling communication, between a client and one or more servers, based on OPC UA protocol.

WESKAMP JAN NICOLAS ET AL, "An Industrie 4.0 compliant and self-managing OPC UA Aggregation Server", 2021 26TH IEEE INTERNATIONAL CONFERENCE ON EMERGING TECHNOLOGIES AND FACTORY AUTOMATION (ETFA ), IEEE, (20210907), relates to the integration process of the Industry 4.0 Asset Administration Shell (I4AAS) into the OPC UA server environment.

OPC UA, short for Open Platform Communications United Architecture, is an Open Data exchange protocol for machine-to-machine communication used extensively in industrial edge and Industrial Internet-of-Things (IIoT) applications. It defines rules for exchanging data between at least one server and at least one client subscribed to the server. The server may define state of a system or device using nodes and variables in an address space.

In existing art, a client may communicate with a single OPC server at a time using OPC UA protocol. To connect to multiple servers sometimes multiple instances of the client are deployed. But this may lead to increased efforts for development of the solutions. Further to the above, different servers may implement different versions of information models or common specifications. However, incompatibilities between the different versions may lead to type conflicts between the versions. Further, existing OPC UA-based client server communications are incapable of handling runtime changes in the address space of the server.

In light of the above, a mechanism for effectively handling run-time changes during communication between a client and one or more servers using OPC UA protocol is required.

The object of the present invention is achieved by a method for enabling client-server communication using OPC UA protocol. The method comprises establishing connection with a one or more servers, by an aggregator. The method further comprises generating an aggregated address space for the servers based on address spaces of the servers. In an embodiment, the step of generating the aggregated address space comprises browsing an address space of each of the servers for identifying nodes present in the address space and relationships between the nodes. Each of the nodes indicate attributes associated with an object. Further, replica nodes corresponding to each of the nodes is created based on the relationships between the nodes to form the aggregated address space.

Advantageously, the present invention enables a client device to connect to a plurality of servers at the same time.

In the invention, the method may further comprise generating mappings between the nodes associated with the servers and the replica nodes in the aggregated address space. The mappings are generated based on unique identifiers corresponding to nodes from each of the servers.

Advantageously, mapping of the nodes to replica nodes using unique identifiers helps in avoiding conflicts arising from nodes having similar node identifiers.

The method further comprises detecting an event in an address space of at least one of the servers in real-time. In an embodiment, the step of detecting the event comprises detecting a change notification from the at least one server. In a further embodiment, the change notification indicates a data change event associated with at least one node in the address space of the at least one server. In another embodiment, the change notification indicates a model change event associated with the address space. The model change event corresponds to at least one of addition of a node to the address space and deletion of a node from the address space.

Advantageously, the present invention is capable of detecting model change events in the servers. Therefore, the aggregator is capable of dynamically handling changes related to the address space of the servers, in real-time.

The method further comprises updating the aggregated address space based on the event. If the change notification indicates a data change event, updating the aggregated address space comprises updating a replica node corresponding to the at least one node, in the aggregated address space, upon detecting the data change event. The method may further include publishing a new value associated with the replica node to a client device subscribed to the server.

Advantageously, the aggregator uniquely identifies and updates the replica node in real-time based on the unique identifiers, thereby eliminating conflicts related to different versions of an object stored on multiple servers.

If the change notification indicates a model change event, updating the aggregated address space comprises updating replica nodes in the aggregated address space upon detecting the model change event. Further, subscriptions to the at least one server is re-established based on the updated replica nodes.

Advantageously, the aggregator updates the aggregated address space and re-establishes the subscriptions based on the model change event, in order to ensure seamless communication between the servers and the client device.

Disclosed herein is also a system comprising one or more servers and an aggregator associated with a client device, as described above, communicatively coupled to each of the servers. The aggregator is configured to perform the method steps as described above.

The above-mentioned attributes, features, and advantages of the present invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
- FIG 1A: shows a block diagram of a system for enabling client-server communication using OPC UA protocol, in accordance with an embodiment of the present invention;
- FIG 1B: shows a block diagram of a client device, in accordance with an embodiment of the present invention;
- FIG 2: shows a flowchart of a method for enabling client-server communication using OPC UA protocol, in accordance with an embodiment of the present invention; and
- FIG 3: illustrates mappings between nodes in address spaces of servers and corresponding replica nodes in an aggregated address space, in accordance with an exemplary embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

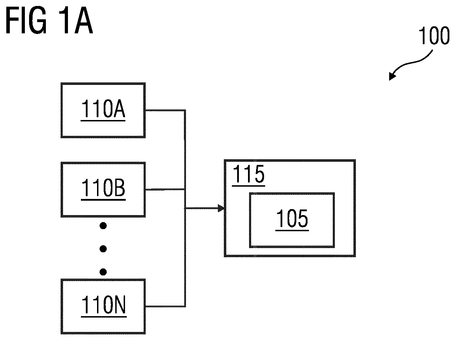

FIG 1A shows a block diagram showing an environment of a system 100 for enabling client-server communication using OPC UA protocol, in accordance with an embodiment of the present invention. The system 100 comprises an aggregator 105 that enables communication between a plurality of OPC UA servers 110A, 110B...110N (henceforth collectively called servers 110) and an OPC UA client 115 (henceforth called client device 115) over a network (not shown). In a preferred embodiment, the aggregator 105 is deployed as a microservice in a virtual environment, for example Docker, on the client device 115. The client device 115 may host a client application that performs analytics based on data received from the servers 110.

Each of the servers 110 may be associated with a system in an industrial environment. The server 110 may store information associated with the system, system components, real-world objects and software objects etc., in the form of objects. The object may include data structures that represent properties of the system using variables and methods. In addition, the object may also indicate relationship with other objects through references.

The object is accessed using predefined OPC UA services. The OPC UA services may be associated with reading or writing a variable value, calling a method or receiving events from the object, browsing relationships between objects and elements of the object and so on.

The object is represented in the address space using nodes that describe attributes associated with the object. The nodes are represented using a graph-like structure in the address space. The relationship to other nodes in the graph-like structure is described in each node using references. An attribute value may be accessed, for example by the client application, using OPC UA services for reading, writing, querying, or subscribing to attribute values. Each of the nodes are associated with a node class. Each of the node classes may represent a different element associated with the object. Examples of node classes include object, variable, method, ObjectType, VariableType, ReferenceType, DataType, View. The details of node classes are not described in detail herein as these would be obvious to person skilled in the art. Every node in the address space is an instance of a node class. Variable nodes are used to represent the data of an object. For example, a file object uses a variable node to represent the file content as array of bytes.

In the present embodiment, each of the servers 110 is integrated with a device (not shown),i.e., a field device, in a railway infrastructure. For example, the device may be a hardware system that publishes a diagnostic state via an OPC UA endpoint associated with the server. The OPC UA endpoint is a physical address on a network that allows the client device 115 to access the server. Each of the servers 110 is configured to publish a message when a variable associated with a node in the respective address space changes.

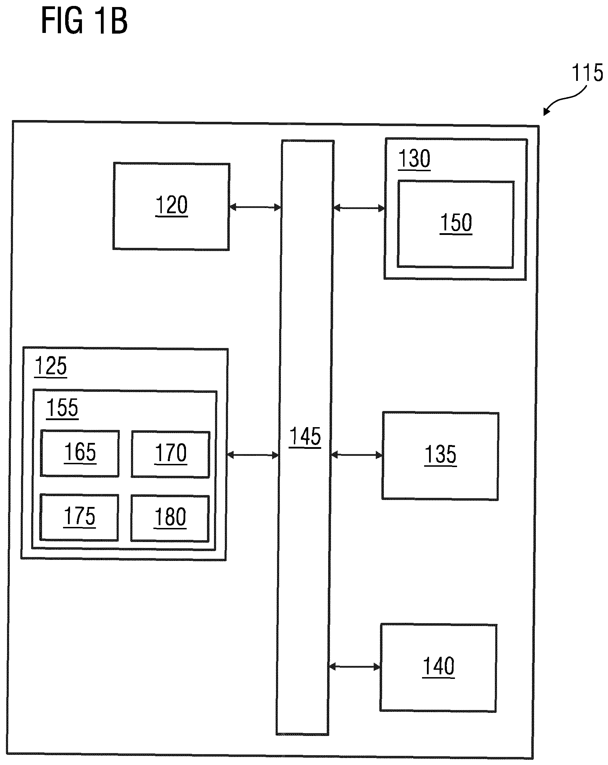

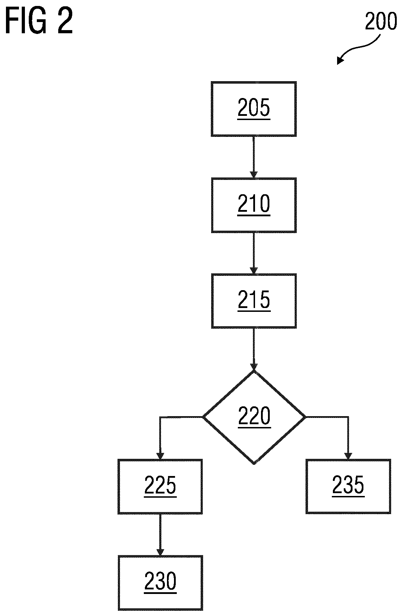

The aggregator 105 is subscribed to each of the servers 110. In other words, when a variable node in the address space of a server 110, changes due to an event, the server 110 publishes a data change notification via the respective OPC UA endpoint. Here, the event corresponds an update in the diagnostic state associated with the device. Upon detecting the data change notification, the aggregator 105 detects the event. The aggregator 105 further updates the client application based on the event as explained in detail using FIG 2. The client device 115 comprises a processing unit 120, a memory 125, a storage unit 130, a communication module 135, a network interface 140, and a standard interface or bus 145, as shown in FIG 1B. The client device 115 can be a (personal) computer, a workstation, a virtual machine running on host hardware, a microcontroller, or an integrated circuit. As an alternative, the aggregator can be a real or a virtual group of computers (the technical term for a real group of computers is "cluster", the technical term for a virtual group of computers is "cloud"). The term 'processing unit', as used herein, means any type of computational circuit, such as, but not limited to, a microprocessor, a microcontroller, a complex instruction set computing microprocessor, a reduced instruction set computing microprocessor, a very long instruction word microprocessor, an explicitly parallel instruction computing microprocessor, a graphics processor, a digital signal processor, or any other type of processing circuit. The processing unit 120 may also include embedded controllers, such as generic or programmable logic devices or arrays, application specific integrated circuits, single-chip computers, and the like. In general, the processing unit 120 may comprise hardware elements and software elements. The processing unit 120 can be configured for multithreading, i.e., the processing unit 120 may host different calculation processes at the same time, executing the either in parallel or switching between active and passive calculation processes.

The memory 125 may include one or more of a volatile memory and a non-volatile memory. The memory 125 may be coupled for communication with the processing unit 120. The processing unit 120 may execute instructions and/or code stored in the memory 125. A variety of computer-readable storage media may be stored in and accessed from the memory 125. The memory 125 may include any suitable elements for storing data and machine-readable instructions, such as read only memory, random access memory, erasable programmable read only memory, electrically erasable programmable read only memory, hard drive, removable media drive for handling compact disks, digital video disks, diskettes, magnetic tape cartridges, memory cards, and the like. The memory 125 comprises an aggregation module 155 that may be stored in the memory 125 in the form of machine-readable instructions and executable by the processing unit 120. The aggregation module 155 comprises a subscription module 165, address space module 170, an event detection module 175, and an update module 180. The subscription module 165 is configured for managing subscriptions to address spaces of the servers 110. The address space module 170 is configured to generate an aggregated address space for the servers 110 based on address spaces of the servers 110. The event detection module 175 is configured for detecting an event in an address space of at least one of the servers 110 in real-time. The update module 180 is configured for updating the aggregated address space based on the event. These machine-readable instructions when executed by the processing unit 120 causes the aggregator 105 to execute, in order to manage communication between the client device 115 and the servers 110.

The storage unit 130 comprises a non-volatile memory which stores the aggregated address space. The storage unit 130 further comprises a database 150 that stores unique identifiers corresponding to nodes in an address space of the servers 110.

The bus 145 acts as interconnect between the processing unit 120, the memory 125, the storage unit 130, and the network interface 140. The communication module 135 enables the aggregator 105 to communicate with the servers 110 using OPC UA protocol.

Those of ordinary skilled in the art will appreciate that the hardware depicted in FIGs 1A and 1Bs may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present disclosure.

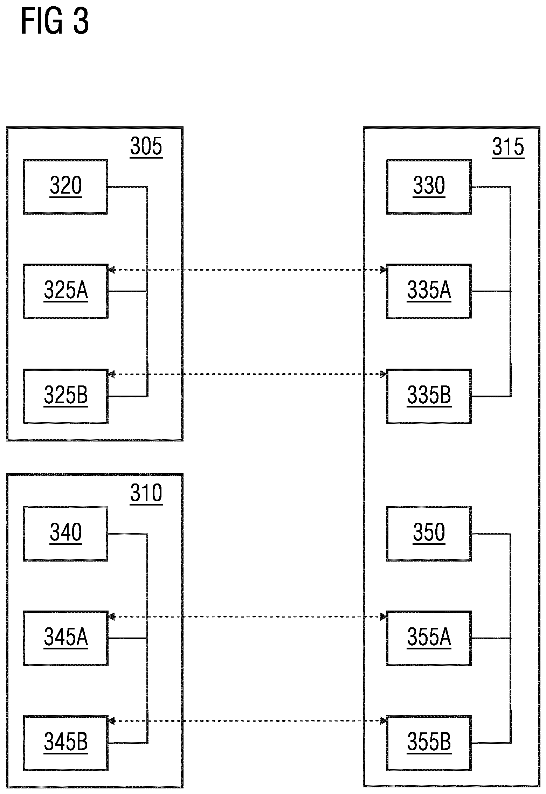

FIG 2 shows a flowchart of a method 200 for enabling client-server communication using OPC UA protocol, in accordance with an embodiment of the present invention. The method 200 is explained in conjunction with FIGs 1A, 1B and 3.

At step 205, the aggregator 105, associated with the client device 115, establishes connections with one or more servers 110. The aggregator 105 establishes the connections by subscribing to an OPC UA endpoint associated with each of the servers 110. Upon subscribing, the aggregator 105 may access the address space corresponding to each of the servers 110, for browsing or querying. In addition, the aggregator 105 also subscribes to events associated with the servers 110. The event may correspond to at least one of a data change event and a model change event. Upon subscribing, the aggregator 105 receives updates on diagnostic states of devices corresponding to each of the servers 110.

In an example, the server 110 may be associated with an axle counting machine configured for publishing a diagnostic state. The diagnostic state published by the axle counting machine may include, for example, a change in track vacancy status. As a train passes over the axle counting machine, an output of the axle counting machine changes. Consequently, a variable node corresponding to the track vacancy status is updated in an address space of the server. Upon updating the variable node, the server 110 publishes a change notification indicating that the track vacancy status has changed. The term 'diagnostic state' refers to data that indicates a state of the device. The data may include, for example, an output of the device, an input to the device, a value computed by the device, environmental parameters associated with the device and so on. In the present example, the diagnostic state corresponds to track vacancy status.

At step 210, an aggregated address space is generated for the servers 110 based on address spaces of the servers 110. The aggregated address space is generated by firstly browsing address spaces of each of the servers 110 for identifying nodes present in the address space and relationships between the nodes. Each of the nodes indicate attributes associated with an object. The address spaces are browsed iteratively, by using a predefined OPC UA service for browsing of address spaces.

The browsing service identifies nodes corresponding to an object and also relationships between the nodes based on references in the nodes. In an embodiment, a unique identifier corresponding to each of the nodes is generated. The unique identifier helps in uniquely identifying nodes from different servers 110 even if the node identifiers are conflicting. For example, if a node from server 110A has a node identifier 1C, another node from server 110B may also include a node with node identifier 1C. This may result in conflicts while reading data from the address spaces of the servers 110A and 110B.

In order to generate the unique identifier, each of the servers 110A and 110B may be associated with a prefix. For example, the prefix for server 110A may be 's1'. If a node in the address space 305 of server 110A, has namespace (ns) as '1' and node identifier (id) as '5061', then the unique identifier is generated based on the prefix, the namespace and the node identifier as s1-{ns=1,id=5061}. The unique identifier would thus help in distinguishing nodes associated with each of the servers 110 through the use of prefixes corresponding to the servers 110.

Further, replica nodes corresponding to each of the nodes is created based on the relationships between the nodes, to form the aggregated address space. The references associated with the nodes in the address spaces are used for defining relationships between the replica nodes in the aggregated address space. Each of the replica nodes may also be associated with a unique identifier generated based on namespace and node identifiers.

Upon creating the aggregated address space, mappings between the nodes associated with the servers 110 and the replica nodes in the aggregated address space are generated. The mappings uniquely identify replica nodes corresponding to each of the nodes based on the unique identifiers. In an implementation, the mappings may be performed based on unique identifiers of nodes and unique identifiers of corresponding replica nodes.

FIG 3 illustrates mappings between nodes in address spaces of servers and corresponding replica nodes in an aggregated address space, in accordance with an exemplary embodiment of the present invention. The first address space 305 is associated with the server 110A and the second address space 310 is associated with the server 110B, while the aggregated address space 315 is associated with the aggregator 105. The first address space 305 comprises an object 320 represented by nodes 325A and 325B. Correspondingly, the aggregated address space 315 comprises an object 330 represented by nodes 335A and 335B. The nodes 335A and 335B are replica nodes corresponding to the nodes 325A and 325B respectively.

Similarly, the second address space 310 comprises an object 340 represented by nodes 345A and 345B. Correspondingly, the aggregated address space comprises an object 350 represented by nodes 355A and 355B. The nodes 355A and 355B are replica nodes corresponding to the nodes 345A and 345B respectively. The dotted arrows between nodes and respective replica nodes indicate the mapping based on unique identifiers.

Referring back to FIG 2, at step 215, an event in the address space of at least one of the servers 110 is detected in real-time. In an embodiment, the event is detected based on a change notification from the at least one server. In an embodiment, the change notification indicates a data change event associated with at least one node in the address space. For example, if node 325A is a variable node, data in the node 325A may change due to a change in diagnostic state of the object 305. In another embodiment, the change notification indicates a model change event associated with the address space. In an example, the model change event may correspond to addition of one or more nodes to the address space 305. In another example, the model change event may correspond to deletion of one or more nodes, say node 325B, from the address space 305.

At step 220, the aggregator 105 identifies whether the change notification indicates a data change event or a model change event. If the change notification corresponds to a data change event, a replica node corresponding to the node is updated as shown at step 225. For example, if the data change event is associated with node 325A, the replica node 335A in the aggregated address space 315 is updated. The replica node is updated based on the mappings. In an example, the change notification may include an updated value associated with the node.

The replica node 335A corresponding to the updated node 325A is further identified based on mappings between the unique identifiers. The identified replica node 335A is updated to reflect the updated value of the node 325A. Further, the new value associated with the replica node 335A is published to the client application subscribed to the server 110A as shown at step 230. For example, the client application may be an analytics application. The client application is updated with the new data from the server 110 in order to perform real-time analytics based on diagnostic states of the devices.

If the change notification corresponds to a model change event, replica nodes in the aggregated address space 315 are updated as shown at step 235. The replica nodes are updated based on the mappings. For example, once the change notification is received, say from server 110A, the aggregator 105 performs a node count on the address space 305 of server 110A using a browsing service. Based on the node count, addition or deletion of nodes associated with the address space 305 is identified. For example, if number of nodes counted is higher than a previous count, addition of a node is detected. Conversely, if number of nodes counted is lower than a previous count, deletion of a node is detected. Further, the aggregator 105 generates a model ready event. The model ready event indicates that the nodes in the address space of the server 110 are stabilised. In other words, the modified address space of the server 110 is ready for syncing onto the aggregated address space. Subsequently, the aggregator 105 recreates the modified address space in the aggregated address space. In other words, the older replica nodes in the aggregated address space are replaced by replica nodes corresponding to the nodes in the modified address space of the server 110. The relationships between the replica nodes are defined based on references of the nodes in the modified address space.

In case of a new node, a unique identifier corresponding to the new node is generated. Further, a replica node is created for the new node in the aggregated address space. Further, unique identifiers corresponding to the new node and the replica node are mapped. Further, subscriptions to at least one server 110 is updated or re-established based on the updated replica nodes. For example, the aggregator 105 may subscribe to events, such as data change events, associated with the new node. In addition to the above, the aggregator 105 may also publish a value associated with the new node to the client application.

In case of a deleted node, a corresponding replica node is identified from the aggregated address space based on the mappings between the nodes and corresponding replica nodes. The replica node is further deleted from the aggregated address space. Further, any subscriptions to events to associated with the deleted node are unsubscribed.

Advantageously, the present invention facilitates communication between a plurality of servers and a client device at the same time, using OPC UA protocol.

The present invention is not limited to a particular computer system platform, processing unit, operating system, or network. One or more aspects of the present invention may be distributed among one or more computer systems, for example, servers 110 configured to provide one or more services to one or more client computers, or to perform a complete task in a distributed system. For example, one or more aspects of the present invention may be performed on a client-server system that comprises components distributed among one or more server systems that perform multiple functions according to various embodiments. These components comprise, for example, executable, intermediate, or interpreted code, which communicate over a network using a communication protocol. The present invention is not limited to be executable on any particular system or group of system, and is not limited to any particular distributed architecture, network, or communication protocol.

While the invention has been illustrated and described in detail with the help of a preferred embodiment, the invention is not limited to the disclosed examples. Other variations can be deducted by those skilled in the art without leaving the scope of protection of the claimed invention.

## Claims

1. A computer-implemented method for enabling communication between a client device (115) and one or more servers (110) based on OPC UA protocol, the method comprising:
establishing (S205) connection with the one or more servers (110), by an aggregator (105) associated with the client device (115);
generating (S210), by the aggregator (105), an aggregated address space for the servers (110) based on address spaces of the servers (110), wherein generating the aggregated address space for the servers (110) comprises:
browsing an address space of each of the servers (110) for identifying nodes present in the address space and relationships between the nodes, wherein each of the nodes indicate attributes associated with an object and wherein a unique identifier corresponding to each of the nodes is generated to uniquely identify nodes from different servers even if the node identifiers are conflicting;
creating replica nodes corresponding to each of the nodes based on the relationships between the nodes to form the aggregated address space, wherein each of the replica nodes is associated with a unique identifier generated; and
generating mappings between the nodes associated with the servers (110) and the replica nodes in the aggregated address space, wherein the mappings are generated based on unique identifiers corresponding to nodes from each of the servers (110) and unique identifiers of corresponding replica nodes;
detecting (S215) an event, by the aggregator (105), in an address space of at least one of the servers (110) in real-time, by detecting a change notification from the at least one server;
identifying (S220), by the aggregator (105), whether the change notification indicates a data change event or a model change event;
updating, by the aggregator (105), the aggregated address space based on the event, wherein
if the change notification corresponds to a data change event associated with a least one node in the address space, the replica node corresponding to the at least one node associated with the data change event is identified based on the mapping between the unique identifiers and is updated with new data from the server; and
if the change notification corresponds to a model change event, the replica nodes are updated based on the mappings, wherein the aggregator (105) performs a node count on the address space (305) of the server from which the change notification is received,
wherein if a number of nodes counted is higher than a previous count, an addition of a new node is detected, a unique identifier corresponding to the new node is generated and a new replica node is created for the new node in the aggregated address space, and the unique identifiers corresponding to the new node and the new replica node are mapped;
conversely if the number of nodes counted is lower that a previous count, a deletion of node is detected, a corresponding replica node is identified and deleted from the aggregated address space based on the mappings between the nodes and the replica nodes.

2. The method according to claim 1, further comprising:
publishing a new value associated with the replica node to a client application subscribed to the server (110A).

3. The method according to claim 1 or 2, wherein updating the aggregated address space based on the event comprises:
re-establishing subscriptions to the at least one server (110A) based on the updated replica nodes.

4. A system (100) comprising:
one or more servers (110);
and an aggregator (105) associated with a client device (110), communicatively coupled to each of the servers (110), wherein the aggregator (105) is configured to perform the method steps in accordance with any of the claims 1 to 3.

## Patentansprüche

1. Computerimplementiertes Verfahren zum Ermöglichen einer Kommunikation zwischen einer Client-Vorrichtung (115) und einem oder mehreren Servern (110) basierend auf einem OPC-UA-Protokoll, wobei das Verfahren Folgendes umfasst:
Herstellen (S205) einer Verbindung mit dem einen oder den mehreren Servern (110) durch einen Aggregator (105), der mit der Client-Vorrichtung (115) assoziiert ist;
Erzeugen (S210), durch den Aggregator (105), eines aggregierten Adressraums für die Server (110) basierend auf Adressräumen der Server (110), wobei das Erzeugen des aggregierten Adressraums für die Server (110) Folgendes umfasst:
Durchsuchen eines Adressraums jedes der Server (110) zum Identifizieren von Knoten, die in dem Adressraum vorhanden sind, und Beziehungen zwischen den Knoten, wobei jeder der Knoten Attribute angibt, die mit einem Objekt assoziiert sind, und wobei eine eindeutige Kennung, die jedem der Knoten entspricht, erzeugt wird, um Knoten von verschiedenen Servern eindeutig zu identifizieren, selbst wenn die Knotenkennungen in Konflikt stehen;
Erzeugen von Replikatknoten, die jedem der Knoten entsprechen, basierend auf den Beziehungen zwischen den Knoten, um den aggregierten Adressraum zu bilden, wobei jeder der Replikatknoten mit einer erzeugten eindeutigen Kennung assoziiert ist; und
Erzeugen von Zuordnungen zwischen den mit den Servern (110) assoziierten Knoten und den Replikatknoten in dem aggregierten Adressraum, wobei die Zuordnungen basierend auf eindeutigen Kennungen, die Knoten von jedem der Server (110) entsprechen, und eindeutigen Kennungen entsprechender Replikatknoten erzeugt werden;
Detektieren (S215) eines Ereignisses durch den Aggregator (105) in einem Adressraum mindestens eines der Server (110) in Echtzeit durch Detektieren einer Änderungsbenachrichtigung von dem mindestens einen Server;
Identifizieren (S220), durch den Aggregator (105), ob die Änderungsbenachrichtigung ein Datenänderungsereignis oder ein Modelländerungsereignis angibt;
Aktualisieren, durch den Aggregator (105), des aggregierten Adressraums basierend auf dem Ereignis, wobei
falls die Änderungsbenachrichtigung einem Datenänderungsereignis entspricht, das mit mindestens einem Knoten in dem Adressraum assoziiert ist, wird der Replikatknoten, der dem mindestens einen Knoten entspricht, der mit dem Datenänderungsereignis assoziiert ist, basierend auf der Zuordnung zwischen den eindeutigen Kennungen identifiziert und wird mit neuen Daten von dem Server aktualisiert; und
falls die Änderungsbenachrichtigung einem Modelländerungsereignis entspricht, werden die Replikatknoten basierend auf den Zuordnungen aktualisiert, wobei der Aggregator (105) eine Knotenzählung an dem Adressraum (305) des Servers durchführt, von dem die Änderungsbenachrichtigung empfangen wird,
wobei, falls eine Anzahl gezählter Knoten höher als eine vorherige Anzahl ist, eine Hinzufügung eines neuen Knotens detektiert wird, eine eindeutige Kennung, die dem neuen Knoten entspricht, erzeugt wird und ein neuer Replikatknoten für den neuen Knoten in dem aggregierten Adressraum erzeugt wird und die eindeutigen Kennungen, die dem neuen Knoten und dem neuen Replikatknoten entsprechen, zugeordnet werden;
ist dagegen die Anzahl der gezählten Knoten niedriger als eine vorherige Zählung, wird ein Löschen des Knotens detektiert, wird ein entsprechender Replikatknoten basierend auf den Zuordnungen zwischen den Knoten und den Replikatknoten identifiziert und aus dem aggregierten Adressraum gelöscht.

2. Verfahren nach Anspruch 1, das ferner Folgendes umfasst: Veröffentlichen eines neuen Wertes, der dem Replikatknoten zugeordnet ist, für eine Client-Anwendung, die beim Server abonniert ist (110A).

3. Verfahren nach Anspruch 1 oder 2, wobei das Aktualisieren des aggregierten Adressraums basierend auf dem Ereignis Folgendes umfasst:
erneutes Einrichten von Abonnements für den mindestens einen Server (110A) basierend auf den aktualisierten Replikatknoten.

4. System (100), das Folgendes umfasst:
einen oder mehrere Server (110);
und einen Aggregator (105), der mit einer Client-Vorrichtung (110) assoziiert ist, der kommunikativ mit jedem der Server (110) gekoppelt ist, wobei der Aggregator (105) dazu ausgelegt ist, die Verfahrensschritte gemäß einem der Ansprüche 1 bis 3 durchzuführen.

## Revendications

1. Procédé, mis en œuvre par ordinateur, pour permettre une communication entre un dispositif client (115) et un ou plusieurs serveurs (110) basé sur le protocole OPC UA, le procédé comprenant les étapes suivantes :
établir (S205) une connexion avec les un ou plusieurs serveurs (110), par un agrégateur (105) associé au dispositif client (115) ;
générer (S210), par l'agrégateur (105), un espace d'adressage agrégé pour les serveurs (110) sur la base d'espaces d'adressage des serveurs (110), la génération de l'espace d'adressage agrégé pour les serveurs (110) comprenant les étapes suivantes :
naviguer dans un espace d'adressage de chacun des serveurs (110) pour identifier des nœuds présents dans l'espace d'adressage et les relations entre les nœuds, chacun des nœuds indiquant des attributs associés à un objet et où un identifiant unique correspondant à chacun des nœuds est généré pour identifier de manière unique des nœuds provenant de différents serveurs même si les identifiants de nœuds sont en conflit ;
créer des nœuds répliques correspondant à chacun des nœuds sur la base des relations entre les nœuds pour former l'espace d'adressage agrégé, chacun des nœuds de réplique étant associé à un identifiant unique généré ; et
générer des mappages entre les nœuds associés aux serveurs (110) et les nœuds répliques dans l'espace d'adressage agrégé, les mappages étant générés sur la base d'identifiants uniques correspondant aux nœuds de chacun des serveurs (110) et d'identifiants uniques des nœuds répliques correspondants ;
détecter (S215) un événement, par l'agrégateur (105), dans un espace d'adressage d'au moins un des serveurs (110) en temps réel, par détection d'une notification de changement en provenance de l'au moins un serveur ;
identifier (S220), par l'agrégateur (105), si la notification de changement indique un événement de changement de données ou un événement de changement de modèle ;
mettre à jour, par l'agrégateur (105), l'espace d'adressage agrégé sur la base de l'événement, où
si la notification de changement correspond à un événement de changement de données associé à au moins un nœud dans l'espace d'adressage, le nœud réplique correspondant à au moins un nœud associé à l'événement de changement de données est identifié sur la base du mappage entre les identifiants uniques et est mis à jour avec de nouvelles données provenant du serveur ; et
si la notification de changement correspond à un événement de changement de modèle, les nœuds répliques sont mis à jour sur la base des mappages, l'agrégateur (105) effectuant un comptage de nœuds sur l'espace d'adressage (305) du serveur à partir duquel la notification de changement est reçue,
où, si un nombre de nœuds comptés est supérieur à un nombre précédent, un ajout d'un nouveau nœud est détecté, un identifiant unique correspondant au nouveau nœud est généré et un nouveau nœud réplique est créé pour le nouveau nœud dans l'espace d'adressage agrégé, et les identifiants uniques correspondant au nouveau nœud et au nouveau nœud réplique sont mappés ;
inversement, si le nombre de nœuds comptés est inférieur à un nombre précédent, une suppression de nœud est détectée, un nœud réplique correspondant est identifié et supprimé de l'espace d'adressage agrégé sur la base des mappages entre les nœuds et les nœuds répliques.

2. Procédé selon la revendication 1, comprenant en outre l'étape suivante :
publier une nouvelle valeur associée au nœud réplique vers une application cliente abonnée au serveur (110A).

3. Procédé selon la revendication 1 ou la revendication 2, dans lequel la mise à jour de l'espace d'adressage agrégé sur la base de l'événement comprend l'étape suivante :
rétablir des abonnements à l'au moins un serveur (110A) sur la base des nœuds répliques mis à jour.

4. Système (100) comprenant :
un ou plusieurs serveurs (110) ;
et un agrégateur (105) associé à un dispositif client (110), couplé de manière communicative à chacun des serveurs (110), où l'agrégateur (105) est configuré pour exécuter les étapes de procédé selon l'une quelconque des revendications 1 à 3.
